## Europäisches Patentamt

## European Patent Office

## Office européen des brevets

(11) Publication number: **0 216 780**
**B1**

(12) **EUROPEAN PATENT SPECIFICATION**

(45) Date of publication of patent specification: **31.10.90**

(21) Application number: **85903799.6**

(22) Date of filing: **02.08.85**

(86) International application number:
**PCT/AU85/00181**

(87) International publication number:
**WO 86/01130 27.02.86 Gazette 86/05**

(51) Int. Cl.⁵: **B 04 C 5/08, B 04 C 5/081,
B 04 C 5/04**

(54) **CYCLONE SEPARATOR.**

(30) Priority: **02.08.84 GB 8419771
02.05.85 GB 8511149**

(43) Date of publication of application:
**08.04.87 Bulletin 87/15**

(45) Publication of the grant of the patent:
**31.10.90 Bulletin 90/44**

(84) Designated Contracting States:
**AT BE CH DE FR IT LI LU NL SE**

(56) References cited:
EP-A-0 068 809    GB-A-1 050 503
WO-A-83/03063    GB-A-1 314 479
WO-A-84/03236    GB-A-1 583 730
CH-A- 421 057    GB-A-2 137 906
DE-A- 830 285    JP-A-5 824 368
DE-A-1 642 903    JP-A-58 174 256
FR-A- 847 750    SU-A- 899 147
FR-A- 930 221    SU-A-1 005 926
FR-A-1 087 413    US-A-2 377 524
GB-A- 260 776    US-A-2 735 547
GB-A- 444 290    US-A-4 237 006
GB-A- 607 787    US-A-4 394 138
GB-A- 769 855

(73) Proprietor: **CONOCO SPECIALTY PRODUCTS
INC.
600 North Dairy Ashford
Houston Texas 77079 (US)**

(72) Inventor: **COLMAN, Derek, Alan
21 Knoll Road Fleet
Hampshire (GB)**
Inventor: **THEW, Martin, Thomas
7 Court Close Bitterne
South Hampton Hampshire (GB)**

(74) Representative: **Day, Jeremy John et al
REDDIE & GROSE 16 Theobalds Road
London, WC1X 8PL (GB)**

(56) References cited:
**CHEMICAL ENGINEERING RESEARCH AND
DESIGN, vol. 61, July 1983, pages 233-240, New
York, US; D.A. COLMAN et al.: "Correlation of
separation results from light dispersion
hydrocyclones"**

## Description

This invention relates generally to cyclone separators. The separator of the present invention finds application in removing a lighter phase from a large volume of a denser phase, such as oil from water, with minimum contamination of the more voluminous phase. Generally, cyclone separators are designed for the opposite purpose, that is, removing a denser phase from a large volume of lighter phase, with minimum contamination of the less voluminous phase. In one form of the present invention, a typical starting liquid-liquid dispersion would contain under 1% by volume of the lighter (less dense) phase, but it could be more.

Cyclone separators of this type are described for example, in GB—A—1583742 and US—A—4237006, GB—A—1583730 or EP—A—0068809.

Cyclone separators of the above type have a generally cylindrical first portion with a plurality of substantially identical substantially equally circumferentially spaced tangentially directed feeds (or groups of feeds), and, adjacent to the first portion and substantially coaxial therewith, a generally cylindrical/tapered second portion open at its far end. The first portion has an axial overflow outlet opposite the second portion (i.e. in its end wall). The second portion comprises a flow-smoothing taper converging towards its said far end, where it leads into a substantially coaxial generally cylindrical third portion.

The cyclone separators of the above type essentially have a plurality of inlets. This invention is based on the observation that it is possible to construct a cyclone separator for separation of a mixture of liquids with a single inlet.

According to the invention a cyclone separator for the separation of a mixture including multiphase liquids, comprises a primary portion having generally the form of a volume of revolution and having a first end and a second end, the diameter $d_2$ at said second end being less than the diameter $d_1$ at said first end, a generally axially symmetrical secondary portion substantially co-axial with said primary portion at said second end of said primary portion, inlet means at said first end of said primary portion for introducing the multiphase mixture to be separated into the cyclone separator, and at least an overflow outlet and an underflow outlet; characterized in that the inlet means is a single inlet with at least a tangential component and the following relationship applies: where di is twice the radius at which flow enters the cyclone (i.e. twice the minimum distance of the tangential component of the inlet centre line to the axis), $A_i$ is the minimum cross-sectional area of the inlet at entry to the cyclone in a plane parallel to the axis of the cyclone, $d_2$ is measured at a point $z_2$ where the condition first applies that:

$$\tan^{-1}\left(\frac{d_2-d}{2(z-z_2)}\right)<2°$$

for all z greater than $z_2$ where z is the distance along the cyclone separator axis downstream of the plane as herein defined containing the inlet and d is the diameter of the cyclone at z, then

$$\frac{\pi d_2 d_i}{4A_i}$$

is from 3 to 12, preferably from 4 to 10 and more preferably from 6 to 8. The above term is termed the "swirl coefficient" and is discussed in more detail later.

The separator may further include a tertiary portion at the end of said secondary portion remote from the primary portion. It will be appreciated that the separator could also include additional portions to those described above.

Preferably, when the cyclone has a tertiary portion, $d_3$ is the cyclone diameter where the secondary portion joins the tertiary section and is defined as the diameter at $z_3$ where $d/d_3>0.98$ for all $z>z_3$.

Preferably,

$$20'<\alpha<2°$$

where $\alpha$ is the half angle of convergence of the secondary portion, i.e.

$$\alpha=\tan^{-1}\frac{d_2-d_3}{2(z_3-z_2)};$$

$$d_0/d_2<0.2;$$

$$0.9d_1>d_2;$$

and

$$0.9d_2>d_3,$$

$d_0$ being the diameter of the overflow outlet.

Preferably the inlet gives into an inward spiralling feed channel which may be involute in form. The feed channel may be fed from a duct directed substantially tangentially into the primary portion, the (outer) wall of the channel converging to the principal diameter of the primary portion $d_1$, for example by substantially equal radial decrements per unit angle around the axis, preferably attaining the diameter $d_1$ after 360° around the axis.

The feed channel need not be in a plane normal to the axis, and if offset, so as to adopt a generally helical form, may attain the diameter $d_1$ after more than 360° (e.g. 720°) around the axis. Using a single inlet, only a single feed connection has to be made to the cyclone separator, which is simpler to install and saves space, important advantages on board a ship or oil-rig; this arrangement also makes for manufacturing simplicity.

The expression

$$\frac{\pi d_2 d_I}{4A_I},$$

which as mentioned above is termed the 'swirl coefficient' S, is a reasonable predictor of the ratio of velocities tangentially: axially of flow which has entered the cyclone and which has reached the plane of $d_2$ and is of particular importance with a dispersed lighter phase in order to be able to create an internal flow structure favourable for separation at a low split ratio i.e. (flow through axial overflow outlet)/(flow through inlet), of the order of 1%. Then the half-angle of convergence averaged over the whole secondary portion is preferably less than 1° and more preferably less than 52' and preferably at least 30'.

The convergence averaged from the diameter $d_1$ measured in the inlet plane to the diameter $d_2$ may be the fastest (largest cone half-angle) in the cyclone, and may be from 5° to 45°. (The inlet plane is that plane normal to the cyclone axis including the centroid of the area $A_I$). The primary portion should be such that the angular momentum of material entering from the inlet is substantially conserved into the secondary portion.

Preferably, $d_3/d_2$ is less than 0.75 (more preferably less than 0.7) and preferably exceeds 0.25 (more preferably exceeding 0.3).

Preferably where the internal length of a downstream tertiary portion is $l_3$ $l_3/d_3$ is at least 1, more preferably at least 5; it is typically about 10 and may be as large as desired, such as at least 40. For space reasons it may be desired to curve the tertiary portion gently, and a radius of curvature of the order of 50 $d_3$ is possible, gentle curvature of the cyclone axis is feasible.

$d_1/d_2$ is preferably from 1.25 to 3. Preferably $d_0/d_2$ is at most 0.15 and preferably at least 0.008, for example from 0.01 to 0.1, such as 0.02 to 0.06. Pressure drop in the axial overflow outlet should not be excessive, and therefore the length of the "$d_0$" portion of the axial overflow outlet should be kept low. The axial overflow outlet may reach its $d_0$ diameter instantaneously or by any form of abrupt or smooth transition, and may widen thereafter by a taper or step. The axial distance from the inlet plane to the "$d_0$" point is preferably less than $4d_2$. The actual magnitude of $d_2$ is a matter of choice for operating and engineering convenience, and may for example be 10 to 100 mm.

In another version, according to the invention, at least part of the generator of the primary portion or of the separation portion or of both is curved. The generator may be, for example,

(i) a monotonic curve (having no points of inflexion) steepest at the inlet-portion end and tending to a cone-angle of zero at its open end, or

(ii) a curve with one or more points of inflexion but overall converging towards the downstream tertiary portion, preferably never diverging towards the downstream tertiary portion.

The apparatus may be used in a method of removing a lighter phase from a larger volume of denser phase in a mixture of liquids, comprising passing the mixture through a cyclone separator as set forth above, the mixture being fed in the inlet of the cyclone separator at a higher pressure than the pressure in the overflow outlet and in the downstream end of the underflow outlet. In practice, it will generally be found that the pressure out of the downstream outlet portion will exceed that out of the axial overflow outlet.

This method is particularly envisaged for removing up to 1 part by volume of oil (light phase) from over 19 parts of water (denser phase), (such as over 99 parts), such as oil-field production water or sea water which may have become contaminated with oil, as a result of spillage, shipwreck, oil-rig blow out or routine operations such as bilge-rinsing or oil-rig drilling. The ratio of flow rates upstream outlet/downstream outlet (and hence the split ratio) has a minimum value for successful separation of the oil, which value is determined by the geometry of the cyclone (especially by the value of $d_0/d_2$) but preferably the cyclone is operated above this minimum value, e.g., by back pressure for example provided by valving or flow restriction outside the defined cyclone. Thus preferably the method comprises arranging the split ratio to exceed $1\frac{1}{2} (d_0/d_2)^2$, preferably to exceed $2 (d_0/d_2)^2$.

The method may further comprise, as a preliminary step, eliminating free gas from the phases such that in the inlet material the volume of any gas is not more than 10%, such as not more than $\frac{1}{2}$%.

As liquids normally become less viscous when warm, water for example being approximately half as viscous at 50°C as at 20°C, the method is advantageously performed at as high a temperature as convenient. The invention extends to the products of the method (such as concentrated oil, or cleaned water).

The invention will now be described by way of example with reference to the accompanying drawings, in which:

Figure 1 shows, schematically, a cross-section taken on the axis of a cyclone separator according to the invention, and

Figure 2 is a view down the axis of the cyclone separator. The drawings are not to scale.

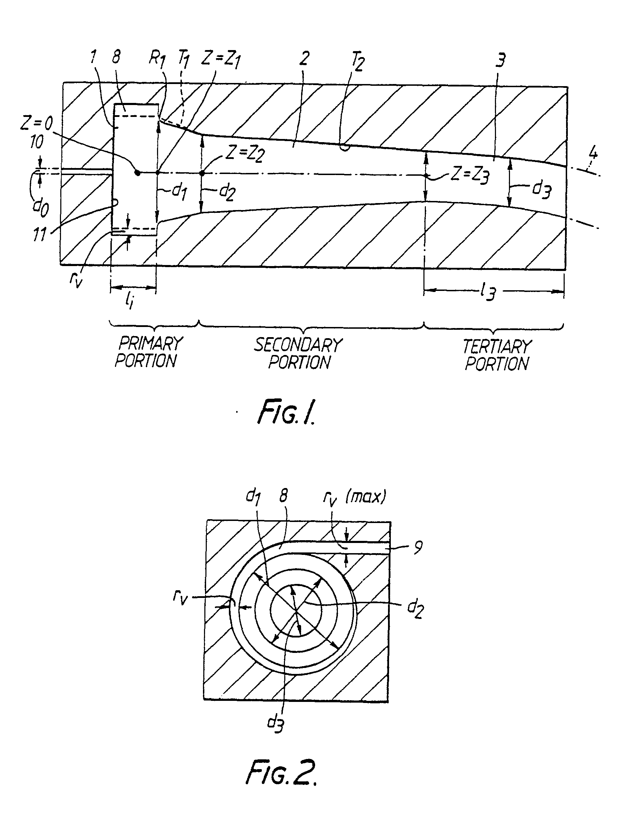

A primary portion 1 having generally the shape of a volume of revolution has a spiral feed channel 8 which in one form may be involute fed from a duct 9 directed tangentially into the widest part of the primary portion 1. The width (radially) of the duct 9 is $r_v(max)$, and the channel 8 converges smoothly to the principal diameter $d_1$ of the inlet portion; thus $r_v$ diminishes linearly to zero at 360° after the point of entry of the duct 9 into the cyclone separator. This is best seen in Figure 2, which is a view down the axis of the cyclone separator, whose end wall 11 has been removed. Coaxial with the primary portion 1, and adjacent to it, is a secondary portion 2, which opens at its far end into a coaxial generally cylindrical downstream tertiary portion 3. The portion 3 opens into collection ducting 4. The channel 8 alternatively may be slightly angled towards the secondary portion 2 to impart an axial component of velocity, and in that case may be helical, reducing to the principal diameter $d_1$ after say 2 full revolutions.

The primary portion 1 has an axial overflow outlet 10 opposite the secondary portion 2.

In the present cyclone separator, the actual relationships are as follows:

$$d_1/d_2 = 1.5$$

The half-angle of conicity of the secondary portion $2 = 40'$ ($T_2$ on Figure).

The average half-angle of conicity of the primary portion $1 = 10°$ ($T_1$ on Figure).

Where the axial extent of the duct 9 is $l_i$, $l_i/d_1 = \frac{1}{2}$ (more precisely 30/57).

$$l_3/d_3 = 40$$
$$d_0 d_2 = 0.04$$

This cyclone should accordingly be operated

at a split ratio $\dfrac{\text{flow rate through upstream outlet}}{\text{flow rate through inlet}}$

of more than $1\frac{1}{2}(0.04)^2$, i.e. more than 0.24%.

To the principal diameter $d_1$ of the primary portion, there must be added a radial amount $r_v$ decreasing smoothly from $9\frac{1}{2}$ mm (maximum) to zero, for the volute inlet.

$$\frac{\pi d_2(d_1 + r_v(\max))}{4 l_i r_v(\max)} = 7, \text{ noting that}$$

$l_i r_v(\max) = A_i$, as defined previously and $(d_1 + r_v(\max)) = d_i$ as defined previously, the foregoing expression thus being the swirl coefficient S of this cyclone. The taper which averages out as $T_1$ actually curves over a radiussing $R_1$ (radius=5 mm) into a frustoconical part of the primary portion 1.

$d_2 = 38$ mm. This is regarded as the 'cyclone diameter' and for many purposes can be anywhere within the range 10—100 mm, for example 15—60 mm; with excessively large $d_2$, the energy consumption becomes large to maintain effective separation while with too small $d_2$ unfavourable Reynolds Number effects and excessive shear stresses arise.

The cyclone separator can be in any orientation with insignificant effect.

The wall 11 is smooth as, in general, irregularities upset the desired flow patterns, within the cyclone. For the best performance, all other internal surfaces of the cyclone should also be smooth. However, wall 11 need not be plane; it could be dished (convex or concave) or may have a small upstanding circular ridge concentric with the outlet 10 to assist the flow moving radially inward near the wall, and the outer 'fringe' of the vortex, to recirculate in a generally downstream direction for resorting. The outlet 10 is a cylindrical bore as shown, but its minimum diameter $d_0$ could instead be approached by a smooth curve of the wall 11, and the outlet 10 could thereafter diverge. Where the minimum diameter is provided by an orifice plate lying flush on the wall 11 and containing a central hole of diameter $d_0$ leading directly to a relatively large bore, the different flow characteristics appear to have a slightly detrimental, though not serious, effect on performance. The outlet 10 may advantageously be divergent in the direction of overflow, with the outlet widening thereafter at a cone half-angle of up to 10°. In this way, a smaller pressure drop is experienced along the outlet, which must be balanced against the tendency of the illustrated cylindrical bore (cone half angle of zero) to encourage coalescence of droplets of the lighter phase, according to the requirements of the user.

To separate oil from water (still by way of example), the oil/water mixture is introduced through the feed channel 8 at a rate of 70—110 l/min with any free gas in the inlet limited to $\frac{1}{2}$% by volume. The mixture is a dispersion of 0.15 parts by volume of Forties field crude oil in 99.85 parts of fresh water at 15.5°C. A convergence $T_1$ of average angle to the axis 10°, made up of a radiussed portion $R_1$ (radius=5 mm) and a frustoconical portion, brings the inlet portion down to the separation portion. Alternatively worded, 10° is the conicity (half-angle) of the notional average frustrum represented by $T_1$. The dispersion swirls into the second portion 2, conserving its angular momentum. The bulk of the oil separates to form an axial oil core within an axial vortex in the second portion 2.

The spiralling flow of the water plus remaining oil then enters the third portion 3. Some remaining oil separates within a continuation of the axial vortex in the third portion 3. The cleaned water leaves through the ducting 4 which may contain any necessary flow restriction and the cleaned water may be collected, for return to the sea for example or for further cleaning, for example in a second similar or identical cyclone or a bank of cyclones in parallel.

Operating this cyclone at a split ratio of about 0.9% by the use of valves to control the flow out of the two outlets, oil entrained along the axis of the vortex moves axially to the overflow outlet and may be collected for dumping, storage or further separation, since it will still contain some water. In this case too, the further separation may include a second similar or identical cyclone.

Where the mean diameter of the oil droplets was 70 micrometres,

$$\text{the efficiency} = 1 - \cfrac{\text{oil concentration in 4}}{\text{oil concentration in 8}}$$

rose with flowrate from 0.955 at 70 l/min to 0.966 at 110 l/min therefore suggesting no significant drop break-up that would be manifest as a more constant or falling efficiency. At 100 l/min efficiency was identical with a known twin-tangential inlet cyclone.

At a smaller drop-size mean diameter 50 micrometres and flowrate 100 l/min, an efficiency of 0.922 was obtained (0.924 in the known cyclone). Other performance characteristics such as the volumetric flowrate through the overflow 10 as a proportion of that through the ducting 4, or the pressure drop between 8 and 4, were broadly similar to the known cyclone, i.e., that described in UK Specification 2102311.

The single duct 9, apart from its advantages in installation and manufacture and space-saving, is more amenable to flow control than a multiple inlet; a simple movable plate or plug or gate adjustable within the duct can be provided to control the inlet flow and, by varying the effective cross-sectional area of the inlet, to control the swirl coefficient S.

## Claims

1. A cyclone separator for the separation of a mixture including multiphase liquids, the separator comprising a primary portion having generally the form of a volume of revolution and having a first end and a second end, the diameter $d_2$ at said second end being less than the diameter $d_1$ at said first end, a generally axially symmetrical secondary portion (2) substantially co-axial with said primary portion (1) at said second end of said primary portion (1), inlet means at said first end of said primary portion (1) for introducing the multiphase mixture to be separated into the cyclone separator, and at least an overflow outlet (10) and an underflow outlet (4); characterized in that inlet means is a single inlet (9) with at least a tangential component and the following relationship applies: where $d_i$ is twice the radius at which flow enters the cyclone (i.e. twice the minimum distance of the tangential component of the inlet centre line from the axis), $A_1$ is the minimum cross-sectional area of the inlet (9) at entry to the cyclone in a plane parallel to the axis of the cyclone, $d_2$ is measured at a point $z_2$ where the condition first applies that:

$$\tan^{-1}\left(\cfrac{d_2-d}{2(z-z_2)}\right) < 2°$$

for all z greater than $z_2$ where z is the distance along the cyclone separator axis downstream of the plane as herein defined containing the inlet and d is the diameter of the cyclone at z, then

$$\cfrac{\pi d_2 d_i}{4 A_i}$$

is from 3 to 12 preferably from 4 to 10, more preferably from 6 to 8.

2. A cyclone separator according to claim 1 further including a tertiary portion (3) substantially coaxial with said secondary portion (2) and at the end of said secondary portion (2) remote from said primary portion (1).

3. A cyclone separator according to claim 2, wherein $d_3$ is the cyclone diameter where the secondary portion (2) joins the tertiary portion (3) and is defined as the diameter at $z_3$ where $d/d_3 > 0.98$ for all $z > z_3$.

4. A cyclone separator according to any preceding claim wherein the half angle of convergence of the secondary portion (2); i.e.

$$\alpha = \tan^{-1}\cfrac{d_2-d_3}{2(z_3-z_2)}$$

is from 20' to 2°, preferably from 30' to 52'.

5. A cyclone separator according to any preceding claim wherein $d_2$ 0.9 $d_1$, $d_1$ being the diameter of the primary portion (1) at said first end in the inlet portion where flow enters the cyclone but neglecting any feed channel (8).

6. A cyclone separator according to any one of claims 3 to 5 wherein $d_3 < 0.9$ $d_2$; and preferably $d_3/d_2$ is from 0.25 to 0.75.

7. A cyclone separator according to any preceding claim wherein the inlet gives into an inwardly spiralling feed channel (8).

8. A cyclone separator according to any preceding claim where the inlet (9) enters the cyclone with a component in the axial downstream direction.

9. A cyclone separator according to any preceding claim wherein one of said outlets is an overflow outlet at said first end of first said primary portion.

10. A cyclone separator according to any preceding claim wherein $d_0/d_2 < 0.2$ where $d_0$ is the diameter of the overflow outlet (10) and preferably $d_0/d_2$ is from 0.008 to 0.1.

11. A cyclone separator according to any preceding claim wherein the primary portion (1) and/or the secondary portion (2) is a volume of revolution, the generator of which is not a straight line and is preferably a continuously curved line.

12. A cyclone separator according to any preceding claim wherein the inlet duct is provided with a movable plate, plug or gate which is adjustable to vary the effective cross-sectional area $A_i$ of the inlet.

## Patentansprüche

1. Zyklonabscheider zum Trennen einer Mischung aus mehrphasigen Flüssigkeiten mit einem ersten Teil, der im allgemeinen die Form eines Rotationsvolumens bzw. Umlaufvolumens hat, mit einem ersten Ende und einem zweiten Ende, wobei der Durchmesser $d_2$ am zweiten Ende geringer ist als der Durchmesser $d_1$ am ersten Ende, mit einem im allgemeinen axial symmetrischen zweiten Teil (2) der im wesentlichen koaxial zum ersten Teil (1) am zweiten Ende des ersten Teil (1) ist, mit Einlaßmitteln am ersten Ende des ersten Teils (1) zum Einführen der mehrphasigen Mischung, die im Zyklonabscheider getrennt werden soll, und mit wenigstens einem Überströmungsauslaß (10) und einem Unterströmungsauslaß (4), dadurch gekennzeichnet, daß die Eimlaßmittel einen einzigen Einlaß (9) mit zumindest einer tangentialen Komponente bilden, und daß die folgende Beziehung gilt: wo $d_i$ zweimal der Radius, bei welchem die Strömung in den Zyklon eintritt (d.h. zweimal der minimale Abstand der Tangentialkomponente der Einlaßmittellinie von der Achse), und $A_1$ die minimale Querschnittsfläche des Einlasses (9) am Eintritt zum Zyklon in einer Ebene parallel zur Achse des Zyklons sind, und $d_2$ an einem Punkt $z_2$ gemessen wird, wo die Bedingung erst gilt, daß:

$$\tan^{-1}\left(\frac{d_2-d}{2(z-z_2)}\right)<2°$$

für alle z größer als $z_2$, wobei z der Abstand entlang der Zyklonabscheiderachse stromabwärts der hierzu definierten Ebene, die den Einlaß aufweist, und d der Durchmesser des Zyklons bei z ist, dann ist

$$\frac{\pi d_2 d_i}{4A_i}$$

von 3 bis 12, vorzugsweise von 4 bis 10, insbesondere bevorzugt von 6 bis 8.

2. Zyklonabscheider nach Anspruch 1, der weiterhin einen dritten Teil (3) aufweist, der im wesentlichen koaxial zum zweiten Teil (2) an dem Ende des zweiten Teils (2) liegt, das vom ersten Teil (1) entfernt liegt.

3. Zyklonabscheider nach Anspruch 2, bei welchem $d_3$ der Zyklondurchmesser an der Stelle ist, wo der zweite Teil (2) sich an den dritten Teil (3) anschließt und definiert ist als Durchmesser bei $z_3$ wobei $d/d_3>0,98$ für alle $z>z_3$ ist.

4. Zyklonabscheider nach einem der vorhergehenden Ansprüche, bei welchem der halbe Konvergenzwinkel des zweiten Teils (2), d.h.

$$\alpha=\tan^{-1}\frac{d_2-d_3}{2(z_3-z_2)}$$

zwischen 20' und 2°, vorzugsweise zwischen 30' und 52' liegt.

5. Zyklonabscheider nach einem der vorhergehenden Ansprüche, bei welchem $d_2<0,9\ d_1$ ist, wobei $d_1$ der Durchmesser des ersten Teils (1) am ersten Ende in dem Einlaßteil ist, wo die Strömung in den Zyklon eintritt, jedoch jeglicher Zuführkanal (8) vernachlässigt wird.

6. Zyklonabscheider nach einem der Ansprüche 3 bis 5, bei welchem $d_3<0,9\ d_2$ ist; und bevorzugt $d_3/d_2$ zwischen 0,25 und 0,75 liegt.

7. Zyklonabscheider nach einem der vorhergehenden Ansprüche, bei welchem der Einlaß in den nach innen spiralförmig verlaufenden Zuführkanal (8) führt.

8. Zyklonabscheider nach einem der vorhergehenden Ansprüche, bei welchem der Einlaß (9) in den Zyklon mit einer Komponente in der axialen Stromabwärts-Richtung eintritt.

9. Zyklonabscheider nach einem der vorhergehenden Ansprüche, bei welchem einer der Auslässe ein Überströmungsauslaß am ersten Ende des ersten Teils ist.

10. Zyklonabscheider nach einem der vorhergehenden Ansprüche, bei welchem $d_0/d_2<0,2$ ist, wobei $d_0$ der Durchmesser des Überströmungsauslasses (10) ist und bevorzugt $d_0/d_2$ zwischen 0,008 und 0,1 liegt.

11. Zyklonabscheider nach einem der vorhergehenden Ansprüche, bei welchem der erste Teil (1) und/oder der zweite Teil (2) ein Rotationsvolumen bzw. Umlaufvolumen ist, dessen Erzeugende keine Gerade sondern vorzugsweise eine kontinuierlich gebogene Linie ist.

12. Zyklonabscheider nach einem der vorhergehenden Ansprüche, bei welchem die Einlaßleitung mit einer beweglichen Platten-, Stopfenoder Schiebereinrichtung versehen ist, die einstellbar ist, um die effektive Querschnittsfläche $A_i$ des Einlasses zu variieren.

**Revendications**

1. Séparateur à cyclone destiné à séparer un mélange contenant des liquides en plusieurs phases, le séparateur contenant une partie primaire ayant de façon générale la forme d'un volume de révolution et ayant une première extrémité et une seconde extrémité, le diamètre $d_2$ à la seconde extrémité étant inférieur au diamètre $d_1$ à la première extrémité, une partie secondaire (2) axialement symétrique de façon générale et sensiblement coaxiale à la partie primaire (1) à la seconde extrémité de la partie primaire (1), un dispositif d'entrée placé à la première extrémité de la partie primaire (1) et destiné à l'introduction d'un mélange à plusieurs phases qui doit être séparé dans le séparateur à cyclone, et au moins une sortie de débordement (10) et une sortie inférieure (4), caractérisé en ce que le dispositif d'entrée est constitué par une entrée unique (9) ayant au moins une composante tangentielle et à laquelle s'applique la relation suivante: si $d_i$ désigne le double du rayon auquel pénètre le courant dans le cyclone (c'est-à-dire le double de la distance minimale de la composante tangentielle de l'axe central de l'entrée à l'axe), $A_i$ la section minimale de l'entrée (9) lorsqu'elle débouche dans le cyclone dans un plan parallèle à l'axe du cyclone, $d_2$ est mesuré en un point $z_2$ auquel la condition suivante s'applique:

$$tg^{-1}[(d_2-d)/2(z-z_2)]<2°$$

pour toute valeur de z qui dépasse $z_2$, z étant la distance mesurée le long de l'axe du séparateur à cyclone en aval du plan tel que défini précédemment et contenant l'entrée et d le diamètre du cyclone en z,

$$\pi d_2 d_i/4A_i$$

est compris entre 3 et 12, de préférence entre 4 et 10 et très avantageusement entre 6 et 8.

2. Séparateur à cyclone selon la revendication 1, comprenant en outre une partie tertiaire (3) pratiquement coaxiale à la partie secondaire (2) et placée à l'extrémité de la partie secondaire (2) qui est distante de la partie primaire (1).

3. Séparateur à cyclone selon la revendication 2, dans lequel $d_3$ est le diamètre du cyclone à l'endroit où la partie secondaire (2) se raccorde à la partie tertiaire (3) et est déterminé comme étant le diamètre en $z_3$ ou $d/d_3>0,98$ pour toutes les valeurs telles que $z>z_3$.

4. Séparateur à cyclone selon l'une quelconque des revendications précédentes, dans lequel le demi-angle de convergence de la partie secondaire (2)

$$\alpha=tg^{-1}[(d_2-d_3)/2(z_3-z_2)]$$

est compris entre 20' et 2°, de préférence entre 30' et 52'.

5. Séparateur à cyclone selon l'une quelconque des revendications précédentes, dans lequel $d_2$ est égal à 0,9 fois $d_1$, $d_1$ étant le diamètre de la partie primaire (1) à la première extrémité dans la partie d'entrée dans laquelle le courant pénètre dans le cyclone, compte non tenu du canal d'alimentation (8).

6. Séparateur à cyclone selon l'une quelconque des revendications 3 à 5, dans lequel $d_3<0,9\ d_2$ et de préférence $d_3/d_2$ est compris entre 0,25 et 0,75.

7. Séparateur à cyclone selon l'une quelconque des revendications précédentes, dans lequel l'entrée débouche dans un canal d'alimentation (8) qui a une forme spiralée vers l'intérieur.

8. Séparateur à cyclone selon l'une quelconque des revendications précédentes, dans lequel l'entrée (9) pénètre dans le cyclone avec une composante en direction axiale tournée vers l'aval.

9. Séparateur à cyclone selon l'une quelconque des revendications précédentes, dans lequel l'une des sorties est une sortie de débordement placée à la première extrémité de la première partie primaire.

10. Séparateur à cyclone selon l'une quelconque des revendications précédentes, dans lequel $d_0/d_2<0,2$, $d_0$ étant le diamètre de la sortie de débordement (10) et étant de préférence tel que $d_0/d_2$ est compris entre 0,008 et 0,1.

11. Séparateur à cyclone selon l'une quelconque des revendications précédentes, dans lequel la partie primaire (1) et/ou la partie secondaire (2) forment un volume de révolution dont la génératrice n'est pas une droite et est de préférence une courbe continue.

12. Séparateur à cyclone selon l'une quelconque des revendications précédentes, dans lequel le conduit d'entrée comporte une plaque, un registre ou un obturateur mobile qui est réglable de manière que la section efficace $A_i$ de l'entrée varie.

*FIG.1.*

*FIG.2.*